# EUROPÄISCHE PATENTSCHRIFT

(11) **EP 1 418 016 B1**
(45) Veröffentlichungstag und Bekanntmachung des Hinweises auf die Patenterteilung: **02.04.2008**
(21) Anmeldenummer: 03025132.6
(22) Anmeldetag: 03.11.2003
(51) Int. Cl.: B23K 9/08, B23K 9/20

(54) **Lichtbogen-Schweissvorrichtung, Verfahren zum Schweissen von Blechen an metallische Gegenstücke, und Schweisselement**
Arc welding device, process for welding sheet metal to metallic corresponding parts, and welding element
Appareil de soudace à l'arc électrique, procédé pour souder des tôles à des pièces correspondantes métalliques et élément de soudage

(30) Priorität: 08.11.2002 DE 10253415
(43) Veröffentlichungstag der Anmeldung: 12.05.2004
(73) Patentinhaber: Newfrey LLC, Newark, Delaware 19711 (US)
(72) Erfinder: Schmidt, Klaus Gisbert Dr., 35390 Giessen (DE)
(74) Vertreter: Haar, Lucas Heinz Jörn

(56) Entgegenhaltungen:
- EP-A- 0 053 380
- DE-C- 4 400 957
- DE-U- 29 905 259
- US-A- 4 278 868

## Beschreibung

Die vorliegende Erfindung betrifft eine Lichtbogen-Schweißvorrichtung zum Schweißen von metallischen Blechen mit einer länglichen Stirnseite auf Stoß an metallische Gegenstücke, mit einer Haltevorrichtung zum Halten eines Bleches, einer Hubvorrichtung zum Vor- und Zurückbewegen der Haltevorrichtung auf das Gegenstück zu bzw. von diesem weg, und einer Spannungsversorgungsvorrichtung zum Anlegen einer Spannung zwischen Blech und Gegenstück, um dazwischen einen Lichtbogen zu erzeugen.

Ferner betrifft die vorliegende Erfindung ein Verfahren zum Schweißen von metallischen Blechen mit einer länglichen Stirnseite auf Stoß an metallische Gegenstücke, wobei zwischen dem Blech und dem Gegenstück eine Spannung angelegt wird, wobei zwischen dem Blech und dem Gegenstück ein Lichtbogen gezündet wird, mittels dessen die Stirnseite des Bleches und der gegenüberliegende Teil des Gegenstückes angeschmolzen werden, und wobei das Blech schließlich zum Herstellen einer Schweißnaht auf Stoß mit dem Gegenstück verbunden wird.

Eine derartige Lichtbogen-Schweißvorrichtung, ein solches Schweißverfahren, und ein derartiges Schweißelement sind als WELDFAST-Schweißsystem von der vorliegenden Anmelderin bekannt.

Auf dem Gebiet des Lichtbogenschweißens, auch Kurzzeit-Lichtbogenschweißen oder Bolzenschweißen genannt, ist es bekannt, Bolzen unterschiedlicher Form auf Gegenstücke in Form von flächigen Blechen aufzuschweißen. Dabei dienen die Bolzen als Befestigungselemente, in der Regel für Kunststoffclips, die an dem Gegenstück eine bestimmte Funktion erfüllen. Als Beispiel sei genannt die Herstellung von Kraftfahrzeugkarosserien, auf die heutzutage eine Vielzahl derartiger Schweißbolzen aufgeschweißt werden, um mittels der Plastikclips später Leitungen daran zu befestigen, um Innenverkleidungen an dem Karosserieblech festzulegen, etc.

Ferner ist es bekannt, Muttern aus Metall auf Bleche aufzuschweißen. Dabei weisen die Bleche häufig vorab ein Loch auf, das konzentrisch mit einem Innengewinde der Mutter ausgerichtet ist, um an dem Blech Gegenstände mittels Schrauben festlegen zu können. Beim Schweißen von Muttern auf Karosseriebleche wird in der Regel ein Magnetfeld verwendet, das so angesteuert wird, daß ein zwischen der Mutter und dem Gegenstück erzeugter Lichtbogen kreisförmig entlang der Stirnseite der Mutter bewegt wird. Dabei weist die Schweißvorrichtung eine Spule rings um die Schweißstelle auf, die ein Rotieren des Lichtbogens auf der Kreisringfläche der Mutter bewirkt. Dies ist beispielsweise beschrieben in "Bolzenschweißen, Grundlagen und Anwendung" von Trillmich Welz, Fachbuchreihe Schweißtechnik, Band 133, Deutscher Verlag für Schweißtechnik DVS-Verlag GmbH, 1997, Kap. 9.4). Eine entsprechende Vorrichtung ist beispielsweise auch offenbart in der DE 44 00 957 C1.

Zum Fügen von Befestigungselementen aus Blech an großflächige Blechteile, z.B. Karosseriebleche, ist es bekannt, an dem jeweiligen Befestigungselement einen Schweißabschnitt abzubiegen, der parallel auf das Karosserieblech aufgesetzt wird. Die Verbindung erfolgt anschließend durch Punktschweißen. Nachteilig ist hierbei, daß eine relativ große Blechmasse des Befestigungselementes für den Schweißabschnitt erforderlich ist, der parallel auf das Karosserieblech aufzulegen ist. Bei der Verwendung einer Vielzahl derartiger Befestigungselemente in einem Kraftfahrzeug steigt das Gewicht des Kraftfahrzeuges stark an.

Zur Lösung dieses Problems ist von der Anmelderin der vorliegenden Erfindung das sogenannte WELDFAST-Schweißverfahren vorgeschlagen worden, das eingangs genannt wurde. Mit dem WELDFAST-Schweißverfahren werden Befestigungselemente in Form kleiner Bleche auf Stoß auf ein Gegenblech aufgeschweißt. Dabei entfällt der bei der Punktschweißtechnologie erforderliche parallele Befestigungsabschnitt, so daß sich erhebliche Gewichtseinsparungen erzielen lassen.

Das WELDFAST-Schweißsystem wird häufig dazu verwendet, kleine Schweißelemente in Form von Blechteilen auf Stoß an flächige Gegenstücke zu schweißen. Ein typisches Anwendungsbeispiel ist die Herstellung von Kraftfahrzeugkarosserien, wobei derartige Schweißelemente an Karosserieteile angeschweißt werden, und später eine bestimmte Funktion übernehmen, beispielsweise zur Lagerung von Kraftstoffleitungen, als Anker für Verkleidungen, etc. Die Schweißelemente weisen dabei einen Schweißabschnitt auf, der eine längliche Stirnseite besitzt. Deren Kontur ist generell an die Kontur des Gegenstückes angepaßt.

Zum Erleichtern des Zündens des Lichtbogens ist die Kontur der Stirnseite dabei häufig abweichend von der Kontur des Gegenstückes stumpfwinklig zulaufend ausgebildet. Der Lichtbogen wird dann beim Hub-Zündungsverfahren mit der stumpfwinkligen Spitze auf das Gegenstück aufgesetzt. Anschließend wird ein Vorstrom angelegt, um beim Abheben des Schweißelementes von dem Gegenstück einen Lichtbogen zu ziehen. Anschließend wird der Schweißstrom zugeschaltet, typischerweise im Bereich von bis zweitausend Ampere, um einen sich über die gesamte längliche Stirnseite des Schweißelementes erstreckenden Lichtbogen zu erzeugen. Anschließend wird das Schweißelement auf das Gegenstück abgesenkt, wobei sich die durch den Lichtbogen gebildeten Schmelzen vermischen. Der Schweißstrom wird abgeschaltet und die Schweißnaht kühlt aus. Die zum Herstellen einer derartigen Schweißverbindung notwendige Energie ist beträchtlich.

Aus der Druckschrift DE 299 05 259 U1 ist es bekannt, eine Schweißvorrichtung für das WELDFAST-Schweißsystem mit Feldformern zur Erzeugung eines auf den Lichtbogen einwirkenden Magnetfeldes auszustatten, wobei dieser teilweise aus einem weichmagnetischen Stahl besteht. Die Feldformer sind gemäß einem Beispiel an den Enden des Bleches vorgesehen und umgeben dieses jeweils U-förmig. Gemäß einem weiteren Beispiel sind Feldformer vorgesehen, die parallel zu dem Blech angeordnet sind. In beiden Fällen sollen die Feldformer ein auf den Lichtbogen einwirkendes Magnetfeld erzeugen, wobei der Feldformer damit die Ausbreitung des Lichtbogens beeinflußt. Wie der Lichtbogen beeinflußt wird und wie das Magnetfeld ausgerichtet ist, ist dieser Druckschrift jedoch nicht zu entnehmen.

Bei einer aus US-A-4,278,868 bekannten Lichtbogen-Schweißvorrichtung der im Oberbegriff des Anspruchs 1 angegebenen Art wird mit Hilfe einer Magnetfelderzeugungsvorrichtung ein sich längs der Schweißfuge und quer zum Lichtbogen gerichtetes Magnetfeld erzeugt, welches bewirkt, daß sich der Lichtbogen längs der Schweißfuge bewegt. Um zu erreichen, daß sich der Lichtbogen wiederholt längs der Schweißfuge hin und her bewegt, ist eine Umpolung des Magnetfelds oder des Stroms der Schweißquelle vorgesehen. Hierzu wird die Magnetfelderzeugungsvorrichtung und/oder der Lichtbogen von einer Wechselstromquelle gespeist, wobei der Schweißvorgang und die Frequenz jeweils so aufeinander abgestimmt werden müssen, daß der Lichtbogen sich jeweils von Ende zu Ende der Schweißfuge bewegt. Da die Bewegung des Lichtbogens sehr stark von den Verhältnissen in der Schweißfuge bestimmt wird, läßt sich das Verhalten des Lichtbogens auf diese Weise nur unzureichend kontrollieren.

Das der Erfindung zugrunde liegende Problem besteht demzufolge darin, eine verbesserte Lichtbogen-Schweißeinrichtung zum Schweißen von metallischen Blechen mit einer länglichen Stirnseite auf Stoß an metallische Gegenstände und ein entsprechendes Schweißverfahren anzugeben.

Diese Aufgabe wird nach der Erfindung durch eine Lichtbogen-Schweißvorrichtung mit den in Anspruch 1 angegebenen Merkmalen und durch ein Schweißverfahren mit den in Anspruch 8 angegebenen Merkmalen gelöst.

Durch die Maßnahme, bei der erfindungsgemäßen Lichtbogen-Schweißvorrichtung eine Magnetfelderzeugungsvorrichtung der beschriebenen Art vorzusehen, ist es möglich, die Stirnseite des Bleches sowie den gegenüberliegenden Teil des Gegenstücks durch einen Lichtbogen anzuschmelzen, der sich entlang der länglichen Stirnseite bewegt. Im Gegensatz zum Stand der Technik gemäß dem WELDFAST-System wird bei der erfindungsgemäßen Lichtbogen-Schweißvorrichtung ein örtlich begrenzter Lichtbogen erzeugt, der sich zum Anschmelzen der Stirnseite und des Gegenstückes entlang der Erstreckung der Stirnseite bewegt. Dabei kann ein Lichtbogen geringerer Energie verwendet werden, der sich im Gegensatz zu dem WELDFAST-Lichtbogen nicht gleichzeitig über die gesamte Länge der Stirnseite erstreckt, sondern wie gesagt örtlich begrenzt ist. Um dennoch die gesamte Stirnseite bzw. das Gegenstück anzuschmelzen, wird der Lichtbogen mittels der magnetischen Lichtbogenauslenkung entlang der Stirnseite bewegt.

Durch die Tatsache, daß das Magnetfeld eine Komponente aufweist, die sich quer zu der Erstreckung der länglichen Stirnseite und quer zur Erstreckung des Lichtbogens aufweist, wird auf den Lichtbogen eine Lorentz-Kraft ausgeübt, die den Lichtbogen entlang der Stirnseite wandern läßt.

Der mit der erfindungsgemäßen Lichtbogen-Schweißvorrichtung erzeugte Lichtbogen kann eine niedrigere Energie besitzen als bei dem bekannten WELDFAST-System. Hierdurch können Schweißvorgänge insgesamt mit geringerem Energieaufwand durchgeführt werden. Auch ist es möglich, die Bleche auf Gegenstücke in Form dünnerer Bleche aufzuschweißen, da die Gefahr geringer ist, daß diese Bleche im Bereich der Schweißnaht durchbrennen.

So ist es bei der erfindungsgemäßen Lichtbogen-Schweißvor-richtung von Vorteil, wenn eine Steuervorrichtung vorgesehen ist, die dazu ausgelegt ist, das Magnetfeld umzupolen, um den Lichtbogen in beide Richtungen der Erstreckung der länglichen Stirnseite bewegen zu können, wobei eine elektronische Einrichtung zur Überwachung der Lichtbogenspannung vorgesehen und ein Umpolvorgang einleitbar ist, wenn sich aus einem stärkeren Anstieg der Lichtbogenspannung ergibt, daß der Lichtbogen das Ende der Stirnseite erreicht hat. Auf diese Weise kann mittels der Steuervorrichtung der Lichtbogen die längliche Stirnseite entlang hin- und herbewegt werden, um so die Stirnseite bzw. das Gegenstück anzuschmelzen. Hierdurch kann der für den Schweißvorgang notwendige Energieaufwand noch weiter minimiert werden, da der Lichtbogen nicht bei einem einzelnen Bewegungsvorgang entlang der Stirnseite die gesamte Aufschmelzenergie aufbringen muß. Dies kann vielmehr durch wenigstens eine Hin- und wenigstens eine Rückbewegung erfolgen, in der Regel jedoch mehrere Hin- und Rückbewegungen.

Ebenfalls ist es von Vorteil, wenn die Magnetfelderzeugungsvorrichtung dazu ausgelegt ist, das Magnetfeld im wesentlichen über die gesamte Länge der Stirnseite zu erzeugen. Hierdurch kann der Lichtbogen über die gesamte Länge der Stirnseite bewegt werden, und gegebenenfalls zurückbewegt werden.

Gemäß einer weiteren bevorzugten Ausführungsform weist die Magnetfelderzeugungsvorrichtung wenigstens eine Spule auf, die an einen magnetischen Kreis angeschlossen ist, der im Bereich der zu bildenden Schweißnaht einen Luftspalt aufweist, zwischen den das Blech mit der Stirnseite einführbar ist. Auf diese Weise läßt sich das Magnetfeld mit der Komponente quer zur Erstreckung der länglichen Stirnseite und quer zur Erstreckung des Lichtbogens auf vergleichsweise einfache Weise erzeugen.

Dabei ist es von besonderem Vorteil, wenn der magnetische Kreis zwei Joche aufweist, die parallel zur Erstreckung der Stirnseite des Bleches angeordnet sind und zwischen sich den Luftspalt definieren. Hierdurch ist es möglich, die Spule räumlich günstig anzuordnen. Das für die Lichtbogenauslenkung relevante Magnetfeld wird zwischen den Jochen erzeugt. Die Form der Joche kann gegebenenfalls an die Form des Bleches angepaßt werden, z.B. wenn dieses Sicken aufweist und/oder in Längsrichtung gewellt ausgebildet ist.

Gemäß einer besonders bevorzugten Ausführungsform ist die Spule um einen Kern gewickelt, der etwa parallel zu dem Blech angeordnet ist und von dem sich zwei Jochschenkel in Richtung hin zu dem Blech erstrecken, wobei der magnetische Kreis ferner ein Gegenjoch auf der gegenüberliegenden Seite des Bleches aufweist, das zwei den Jochschenkeln entsprechende Schenkel und ein diese verbindendes Verbindungsstück aufweist.

Der magnetische Kreis ist demzufolge durch den Kern, die zwei sich hiervon erstreckenden Jochschenkel und das Gegenjoch gebildet, wobei dazwischen zwei Luftspalte angeordnet sind. Der eine Luftspalt ist jener, der sich im Bereich der zu bildenden Schweißnaht befindet. Der andere Luftspalt ist zwangsläufig oberhalb dieses Luftspaltes angeordnet. Durch diese Ausbildung ist ein Magnetfeld mit einer Komponente quer zur Erstreckung der länglichen Stirnseite und quer zur Erstreckung des Lichtbogens auf konstruktiv einfache Weise zu erzeugen.

Dabei ist es besonders bevorzugt, wenn an dem Gegenjoch eine weitere Spule angeordnet ist. Hierdurch kann die magnetische Feldstärke in dem der Schweißnaht zugeordneten Luftspalt erhöht werden.

Insgesamt ist es von Vorteil, wenn dann, wenn das Blech ein ferromagnetisches Material aufweist, die Haltevorrichtung ein nicht-ferromagnetisches Halteelement aufweist, das während des Schweißvorganges in einem Luftspalt eines magnetischen Kreises angeordnet ist, mittels dessen das Magnetfeld erzeugt wird.

Insbesondere bei der oben beschriebenen bevorzugten Ausführungsform des magnetischen Kreises kann das Halteelement aus nicht-ferromagnetischem Material dann in dem oberen Luftspalt angeordnet werden, so daß ein Kurzschluß des magnetischen Kreises über das aufzuschweißende Blech selbst vermieden wird.

Gemäß einer weiteren bevorzugten Ausführungsform liegt der durch den Lichtbogen fließende Schweißstrom je nach Breite des zu verschweißenden Elementes in einem Bereich, der kleiner ist als der Schweißstrom, der zur Abdeckung der gesamten Breite des Befestigungselementes notwendig ist, und kann beispielsweise bis 200 A reduziert werden. Bei einem Lichtbogen mit dieser Stromstärke ergibt sich insgesamt ein geringer Energieverbrauch beim Schweißvorgang. Ferner läßt sich das Blech auch auf dünne Gegenbleche auf Stoß schweißen.

Bei dem erfindungsgemäßen Verfahren wird das Magnetfeld umgepolt, wenn der Lichtbogen ein Ende der Stirnseite erreicht, um den Lichtbogen in die entgegengesetzte Richtung zu bewegen. Hierdurch ist es möglich, den Lichtbogen an der Stirnseite hin- und herzubewegen.

Es hat sich gezeigt, daß der Lichtbogen, insbesondere bei geeigneter Ausbildung der Kontur an dem Ende des aufzuschweißenden Bleches bzw. Schweißelementes, sich von dem Ende der Stirnseite des Bleches zu dem Gegenstück hin über die Erstreckung der Stirnseite hinaus auslenkt, so daß die Länge des Lichtbogens vergrößert wird.

Hierdurch steigt die Lichtbogenspannung. Dies kann von einer geeigneten Elektronik überwacht werden und dazu benutzt werden, den Umpolvorgang einzuleiten.

Alternativ ist es auch möglich, den Umpolvorgang aufgrund anderer Parameter einzuleiten, beispielsweise durch zeitliche Steuerung. Hierbei wird man auf geeignete Erfahrungswerte zurückgreifen müssen, wann der Lichtbogen bei bestimmten Randbedingungen das Ende der Stirnseite erreicht hat. Auch ist es natürlich möglich, das Erreichen des Endes der Stirnseite zu erkennen, indem im Bereich des Endes der Stirnseite geeignete Sensoren, beispielsweise optische Sensoren oder magnetische Sensoren, vorgesehen werden.

Auch ist es insgesamt von besonderem Vorteil, wenn die zu verschweißenden Flächen des Bleches bzw. des Gegenstücks vor dem Schweißvorgang mittels eines Lichtbogens gereinigt werden, der mittels des Magnetfeldes entlang jener Flächen bewegt wird, und einen Strom führt, dessen Betrag kleiner ist als ein Schweißstrom.

Der Reinigungs-Lichtbogenstrom ist so gewählt, daß die Stirnfläche des Bleches und das Gegenstück noch nicht angeschmolzen werden, sondern vielmehr die Fügezone von Oberflächenbeschichtungen und -verschmutzungen gereinigt wird. Hierdurch können bei kleinen Schweißströmen extrem spritzerarme Schweißverbindungen hergestellt werden.

Es versteht sich, daß die vorstehend genannten und die nach-stehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische perspektivische Ansicht einer ersten Ausführungsform der erfindungsgemäßen Lichtbogen-Schweißvorrichtung:
- Fig. 2a: eine schematische Darstellung der Schweißvorrichtung der Fig. 1 von oben, wobei mittels einer Magnetfeld-erzeugungsvorrichtung im Bereich der Fügezone ein Magnetfeld erzeugt wird, so daß ein Lichtbogen in eine Richtung wandert;
- Fig. 2b: eine der Fig. 2a entsprechende Darstellung, wobei das Magnetfeld umgepolt ist, so daß der Lichtbogen in die andere Richtung wandert;
- Fig. 3: eine Ansicht der Stirnseite einer weiteren Ausführungsform der erfindungsgemäßen Lichtbogen-Schweißvorrichtung mit einer Haltevorrichtung, die ein nicht-ferromagnetisches Halteelement aufweist;
- Fig. 4: eine perspektivische schematische Darstellung eines typischen Schweißelementes;
- Fig. 5: eine schematische perspektivische Darstellung einer weiteren Ausführungsform eines erfindungsgemäßen Schweißelementes;
- Fig. 6: eine schematische Draufsicht auf eine weitere Ausführungsform eines erfindungsgemäßen Schweißelementes mit zugeordneten Jochen der Magnetfelderzeugungsvorrichtung;
- Fig. 7: eine schematische Draufsicht auf eine weitere Ausführungsform eines erfindungsgemäßen Schweißelementes mit zugeordneten Jochen der Magnetfelderzeugungsvorrichtung;
- Fig. 8: ein Diagramm mit dem zeitlichen Ablauf des Weges des Schweißelementes sowie des Schweißstromes während eines Schweißvorganges;
- Fig. 9: ein der Fig. 8 zugeordnetes Diagramm des zeitlichen Verlaufes eines Stromes durch eine Spule der Magnetfelderzeugungsvorrichtung;
- Fig. 10: eine schematische Darstellung eines auf ein Gegenblech auf Stoß aufzuschweißendes Schweißelementes in einer Seitenansicht;
- Fig. 11: ein der Darstellung der Fig. 10 zugeordnetes Diagramm der Lichtbogenspannung über dem Weg des Lichtbogens;
- Fig. 12: eine bevorzugte Kontur der Stirnseite des erfindungsgemäßen Schweißelementes im Bereich eines Endes seiner Stirnseite; und
- Fig. 13: eine weitere Ausführungsform der Kontur der Stirnseite des erfindungsgemäßen Schweißelementes im Bereich eines Endes seiner Stirnseite.

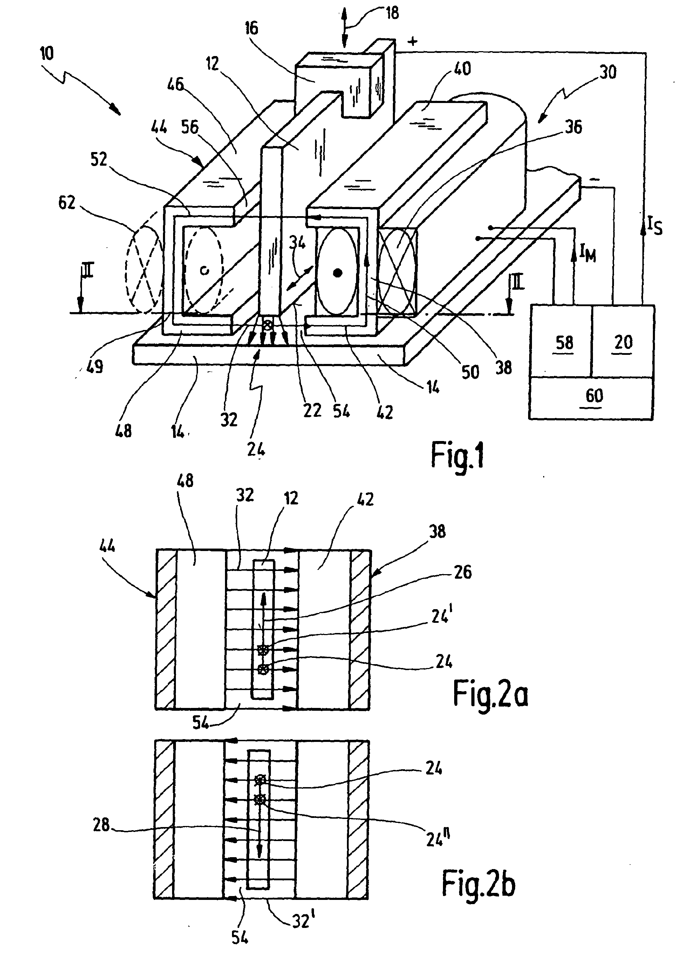

In den Figuren 1 und 2 ist eine erste Ausführungsform einer erfindungsgemäßen Lichtbogen-Schweißvorrichtung generell mit 10 bezeichnet.

Die Lichtbogen-Schweißvorrichtung (im folgenden kurz Schweißvorrichtung) dient dazu, ein Schweißelement in Form eines länglichen Bleches bzw. Blechabschnittes 12 aus Metall auf Stoß auf ein Gegenstück in Form eines Gegenbleches 14, beispielsweise eines Karosseriebleches eines Kraftfahrzeuges aufzuschweißen.

Die Schweißvorrichtung 10 weist eine Haltevorrichtung 16 auf, um das Blech 12 zu halten. Eine schematisch angedeutete Hubvorrichtung 18 dient dazu, die Haltevorrichtung 16 mit dem Blech 12 vor - und zurückzubewegen, und zwar in Richtung hin zu dem Gegenstück 14 bzw. von dem Gegenstück 14 weg.

Eine Spannungsversorgungsvorrichtung 20 dient dazu, eine elektrische Spannung vom Blech 12 zum Gegenstück 14 anzulegen.

Die gezeigte Schweißvorrichtung 10 arbeitet im sogenannten Hub-Zündungsverfahren. Das heißt, eine auf das Gegenstück 14 weisende Stirnseite 22 des Bleches 12 wird auf Stoß auf das generell quer bzw. senkrecht hierzu angeordnete Gegenstück 14 abgesenkt. Anschließend wird die Spannungsversorgungsvorrichtung 20 auf einen Vorstrom geschaltet und anschließend wird das Blech 12 mittels der Hubvorrichtung 18 von dem Gegenstück 14 abgehoben, wobei ein Lichtbogen 24 gezogen wird.

Alternativ kann die Schweißvorrichtung auch mit Spitzenzündung arbeiten.

Zum Schweißen wird die Spannung der Spannungsversorgungsvorrichtung 20 erhöht, so daß ein Schweißstrom Iₛ über den Lichtbogen 24 fließt, der dazu geeignet ist, die Stirnseite 22 und den gegenüberliegenden Teil des Gegenstückes 14 lokal anzuschmelzen. Der hierdurch gebildete Lichtbogen 24 ist örtlich begrenzt, d.h. er erstreckt sich nicht über die gesamte Stirnseite 22 des Bleches 12. Typische Werte des Schweißstromes liegen im Bereich < 500 A, insbesondere < 400 A. In vielen Anwendungen ist ein Schweißstrom I_{S} von 300 A hinreichend.

Der örtlich begrenzte bzw. lokale Lichtbogen 24 wird dann, wie es in Fig. 2 zu erkennen ist, entlang der Stirnseite 22 des Bleches 12 zunächst in eine erste Richtung 26 bewegt und anschließend in eine zweite Richtung 28, die entgegengesetzt zu der ersten Richtung 26 ausgerichtet ist. Dies ist in Fig. 2a durch die schematisch angedeuteten Lichtbogen 24, 24' gezeigt, und in Fig. 2b durch die schematisch angedeuteten Lichtbogen 24, 24".

Zum Bewegen des Lichtbogens 24 entlang der Stirnseite 22 des Bleches 12 dient eine Magnetfelderzeugungsvorrichtung, die in Fig. 1 generell mit 30 bezeichnet ist. Die Magnetfelderzeugungsvorrichtung 30 erzeugt im Bereich der Schweißzone ein Magnetfeld mit einer Komponente 32, die zum einen quer verläuft zu der Längserstrekkung 34 der Stirnseite 22, und zum anderen quer zu der Erstreckung des Lichtbogens 24, der generell von der Stirnseite 22 etwa senkrecht hin zu dem Gegenstück 14 verläuft. Durch diese Magnetfeldkomponente 32 wirkt auf den Lichtbogen 24 eine Lorentz-Kraft, die den Lichtbogen in Richtung der Erstreckung der Stirnseite 22 bewegt. In Fig. 2a ist gezeigt, daß sich der Lichtbogen bei einer Magnetfeldkomponente 32 in die erste Richtung 26 bewegt. In Fig. 2b ist gezeigt, daß sich der Lichtbogen 24 durch eine Magnetfeldkomponente 32', die entgegengesetzt verläuft zu der Magnetfeldkomponente 32, in die entgegengesetzte zweite Richtung 28 bewegt.

Das Magnetfeld wird erzeugt mittels einer Spule 36, die auf einen Magnetkern gewikkelt ist, der sich generell parallel zu dem Blech 12 erstreckt. Von dem Kern 38 erstreckt sich ein oberer Jochschenkel 40 hin zu dem Blech 12. Ein unterer Jochschenkel 42 erstreckt sich im Bereich der Schweißzone hin zu dem Blech 12.

Die Magnetfelderzeugungsvorrichtung weist ferner ein Gegenjoch 44 auf. Das Gegenstück 44 ist etwa spiegelbildlich zu der Anordnung aus Kern 38 und oberem und unterem Jochschenkel 40, 42 ausgebildet und weist einen oberen Schenkel 46, einen unteren Schenkel 48 und ein die Schenkel 46, 48 verbindendes Verbindungsstück 49 auf.

Durch diese Anordnung wird ein magnetischer Kreis 52 eingerichtet, der ein Magnetfeld 50 führt, das von dem Kern 38 über den oberen Jochschenkel 40, einen oberen Luftspalt 56, den oberen Schenkel 46, das Verbindungsstück 49, den unteren Schenkel 48, einen unteren Luftspalt 54 und über den unteren Jochschenkel 42 geführt ist.

Das Blech 12 wird für einen Schweißvorgang über den oberen Luftspalt 56 hin zu dem unteren Luftspalt 54 eingeführt, so daß die Stirnseite 22 etwa oberhalb des unteren Luftspaltes 54 liegt. Dabei wirkt die Komponente 32 des Magnetfeldes 50 über die gesamte Längserstreckung 34 der Stirnseite 22, um so den Lichtbogen 24 zu bewegen.

Es versteht sich, daß das Blech 12 in der dargestellten Ausführungsform aus einem nicht-ferromagnetischen Material sein sollte, da ansonsten die Gefahr besteht, daß der magnetische Kreis 52 über das Blech 12 kurzgeschlossen wird.

Für die Spule 36 ist eine weitere Spannungsversorgungsvorrichtung 58 vorgesehen, die dazu ausgelegt ist, einen Spulenstrom I_{M} zu erzeugen. Eine Steuervorrichtung 60 ist vorgesehen, die die Spannungsversorgungsvorrichtung 20 für den Schweißstrom I_{S} und die Spannungsversorgungsvorrichtung 58 für den Spulenstrom I_{M} ansteuert. Dabei ist die Steuervorrichtung 60 insbesondere dazu ausgelegt, die Spannungsversorgungsvorrichtung 58 zu geeigneten Zeitpunkten umzupolen. Hierdurch läßt sich der Lichtbogen 24, sobald er bei einer Bewegung entlang der Stirnseite 22 ein Ende der Stirnseite 22 erreicht hat, wieder in die entgegengesetzte Richtung bewegen.

Das Umpolen des Magnetfeldes 50 kann beispielsweise zeitgesteuert erfolgen oder mittels geeigneter Sensorik (in Fig. 1 nicht dargestellt), die dazu ausgelegt ist, die jeweilige Position des Lichtbogens 24 zu erfassen. Über einen in der Steuervorrichtung 60 vorgesehenen Regelkreis wird das Magnetfeld 50 dann umgepolt.

Bei 62 ist eine optionale weitere Spule gezeigt, die an dem Verbindungsstück 49 vorgesehen sein kann, um das Magnetfeld 50 zu verstärken.

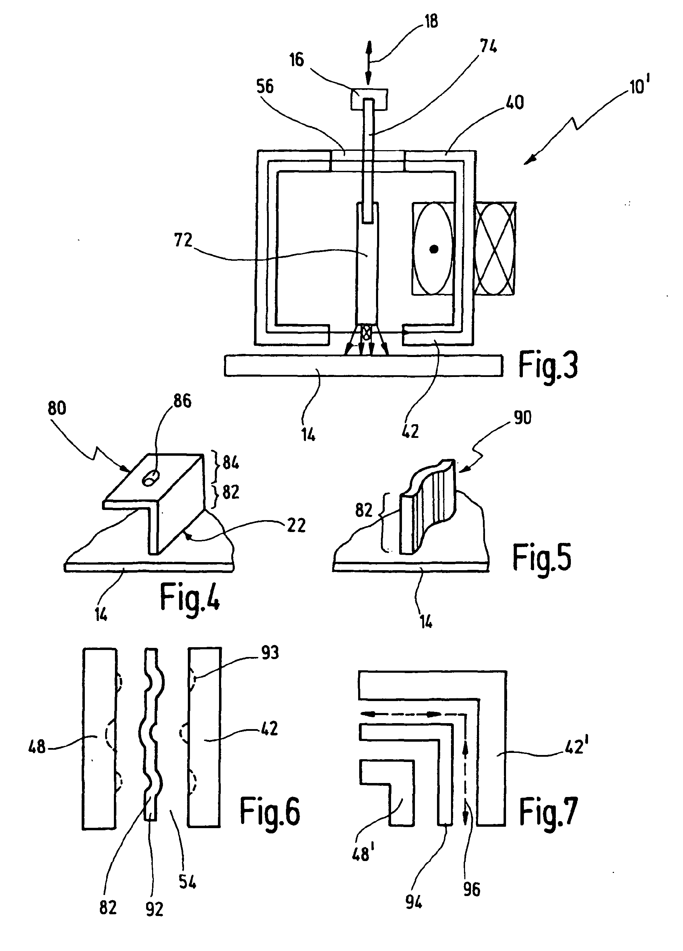

In Fig. 3 ist mit 10' generell eine abgewandelte Ausführungsform der Schweißvorrichtung 10 der Fig. 1 und 2 dargestellt. Der generelle Aufbau der Schweißvorrichtung 10' ist identisch zu jenem der Schweißvorrichtung 10. Im Unterschied zu dieser weist die Schweißvorrichtung 10' ein Halteelement 74 aus einem nicht-ferromagnetischen Material auf, das dazu ausgelegt ist, ein ferromagnetisches Blech 72 zu halten. Wenn das ferromagnetische Blech 72 in die Magnetfelderzeugungsvorrichtung 30 eingeführt ist, liegt das nicht-ferromagnetische Halteelement 74 auf der Höhe des oberen Luftspaltes 56. Demzufolge wird vermieden, daß über das ferromagnetische Blech 72 ein Kurzschluß von dem oberen Jochschenkel 40 zu dem unteren Jochschenkel 42 erzeugt wird.

Bei dieser Ausführungsform ist die Haltevorrichtung 16 dazu ausgelegt, das Halteelement 74 zu halten.

Die erfindungsgemäße Schweißvorrichtung ist dazu ausgelegt, Bleche beliebiger Form auf Stoß auf quer, insbesondere etwa senkrecht hierzu angeordnete Gegenstücke (Gegenbleche) aufzuschweißen. Die Schweißvorrichtung kann insbesondere auf dem Gebiet des Karosseriebaus für Kraftfahrzeuge verwendet werden. Auf diesem Gebiet werden häufig kleinere Blechteile auf das Karosserieblech aufgeschweißt. Die kleineren Blechteile dienen als Befestigungsteile bzw. Anker für Befestigungsteile.

Ein typisches Beispiel eines derartigen Bleches bzw. Blechelementes ist in Fig. 4 bei 80 gezeigt. Das Blech 80 weist einen Schweißabschnitt 82 auf, der etwa senkrecht gegenüber dem Gegenstück 14 ausgerichtet ist und eine Stirnseite 22 besitzt, deren Kontur etwa an die Kontur des Gegenstückes 14 angepaßt ist. Oberhalb des Schweißabschnittes 82 weist das Blech 80 einen Funktionsabschnitt 84 auf. Der Funktionsabschnitt 84 kann eine weitgehend beliebige Form besitzen und ist im vorliegenden Fall als L-förmig abgebogener Blechabschnitt ausgebildet, in dem ein Befestigungsloch 86 vorgesehen ist. An dem Befestigungsloch 86 können bei der weiteren Herstellung des Kraftfahrzeuges beliebige Teile befestigt werden, beispielsweise Innenverkleidungen, elektrische oder Kraftstoffleitungen, um nur einige Beispiele zu nennen.

In Fig. 5 ist der Schweißabschnitt 82 eines weiteren, zum Aufschweißen auf ein Gegenstück 14 geeigneten Bleches 90 gezeigt. Der Schweißabschnitt 82 des Bleches 90 ist in Längsrichtung, also etwa parallel zur Stirnseite 22, durchgehend gewellt ausgebildet. Hierdurch ergibt sich im aufgeschweißten Zustand eine höhere Biegefestigkeit gegenüber Kräften, die senkrecht an der Breitseite des Bleches 90 angreifen.

Der dazugehörige Funktionsabschnitt 84 ist in Fig. 5 nicht dargestellt. Er kann wie bei der Ausführungsform der Fig. 4 eine beliebige Form besitzen.

In Fig. 6 ist eine weitere Ausführungsform eines Bleches 92 gezeigt, das über die Längsseite abwechselnd mit sich in unterschiedliche Richtungen erstreckenden Sicken ausgebildet ist, die die Biegefestigkeit ebenfalls erhöhen.

In Fig. 6 ist ferner gezeigt, daß bei dieser Ausführungsform der untere Jochschenkel 42 und der untere Schenkel 48 mit einer der Form des Bleches 92 entsprechenden Kontur 93 versehen sein können, also mit den Sicken entsprechenden Ausnehmungen bzw. Vorsprüngen. Obgleich dies in vielen Fällen für nicht notwendig erachtet wird, kann doch hierdurch eine homogenere Beeinflussung des Lichtbogens 24 erzeugt werden.

Generell gesagt, kann die Form der den Luftspalt 54 bildenden Joche an die Form des Schweißabschnittes 82 angepaßt sein. Insbesondere ist es möglich, den Schweißabschnitt 82 weitgehend standardisiert auszuführen und für unterschiedliche Befestigungszwecke Bleche mit unterschiedlichen Funktionsabschnitten 84 vorzusehen.

In Fig. 7 ist eine Ausführungsform mit einem in der Draufsicht abgewinkelten Blech 94 gezeigt. In entsprechender Ausgestaltung sind die Jochelemente 42', 48' ebenfalls abgewinkelt ausgebildet, so daß der Lichtbogen einen abgewinkelten Weg 96 durchfährt.

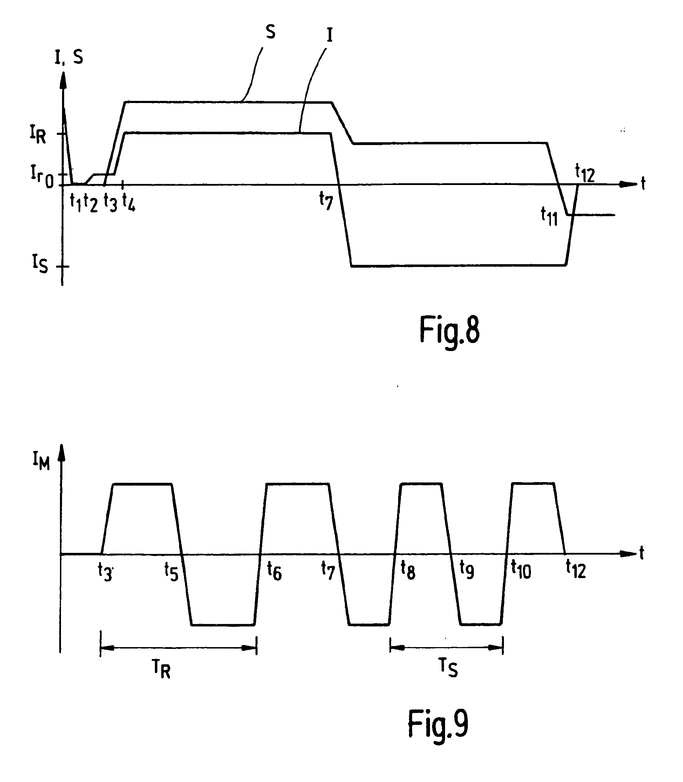

In den Figuren 8 und 9 ist der zeitliche Ablauf eines typischen Schweißvorganges mit der Schweißvorrichtung 10 gezeigt.

Fig. 8 zeigt den zeitlichen Verlauf des von der Spannungsversorgungsvorrichtung 20 bereitgestellten Stromes I und den zeitlichen Ablauf des Hubes s der Hubvorrichtung 18. Fig. 9 zeigt den zeitlichen Verlauf des von der Spannungsversorgungsvorrichtung 58 bereitgestellten Stromes I_{M}.

Zu einem Zeitpunkt t₁ wird zunächst das Blech 12 mit seiner Stirnseite 22 auf das Gegenstück 14 abgesenkt. Diese Position ist in Fig. 8 als Null-Position festgelegt. Bei t₂ wird anschließend ein Vorstrom Iv eingeschaltet, der dazu geeignet ist, einen Lichtbogen 24 zu ziehen. Anschließend wird das Blech 12 bei t₃ von dem Gegenstück 14 abgehoben und der Lichtbogen 24 gezogen. Bei t₄ wird ein sogenannter Reinigungsstrom I_{R} eingestellt, der höher ist als der Vorstrom. Der Reinigungsstrom I_{R} ist dazu geeignet, die Oberfläche der Stirnseite 22 und die gegenüberliegende Fläche des Gegenstückes 14 von Verunreinigungen zu reinigen, insbesondere von Oberflächenbeschichtungen und/oder Verschmutzungen. Diese Art von Prozeß ist generell bekannt und wird von der vorliegenden Anmelderin unter der Bezeichnung "Cleanflash" angewendet.

Parallel zu dem Anheben des Bleches 12 wird zum Zeitpunkt t₃ der Magnetstrom I_{M} eingeschaltet, so daß der erzeugte Licht-bogen durch die Magnetfeldkomponente 32 beeinflußt wird und gleich zu Beginn beginnt, entlang der Stirnseite 22 zu wandern.

Zum Zeitpunkt t₅ wird der Spulenstrom I_{M} umgepolt. Zu diesem Zeitpunkt hat der Lichtbogen 24 ein Ende der Stirnseite 22 erreicht und wandert durch die Umpolung dann in die entgegengesetzte Richtung.

Beim Zeitpunkt t₆ erfolgt wiederum eine Umpolung, so daß die Stirnseite 22 von dem Lichtbogen 24 noch einmal überstrichen wird.

Zum Zeitpunkt t₇ wird das Blech etwas näher an das Gegenstück 14 angenähert und der von der Spannungsversorgungsvorrichtung 20 bereitgestellt Strom wird umgepolt und auf den Schweißstrom I_{S} eingestellt. Gleichzeitig hiermit wird die Magnetfeldkomponente 32 durch Umpolen des Spulenstromes I_{M} erneut umgepolt.

Der Schweißstrom I_{S} weist eine andere Polarität auf als der Reinigungsstrom I_{R}, und hat einen höheren Betrag, der, wie oben erwähnt, im Bereich von 300 A liegen kann.

Im weiteren zeitlichen Verlauf erreicht der Lichtbogen 24 wieder das gegenüberliegende Ende der Stirnseite 22 und der Spulenstrom I_{M} wird erneut umgepolt. Weitere Umpolungen erfolgen bei t₉ und t₁₀, bei denen der Lichtbogen 24 jeweils entgegengesetzte Enden der Stirnseite 22 erreicht hat.

Zum Zeitpunkt t₁₁ sind die Stirnseite 22 des Bleches 12 und der gegenüberliegende Bereich des Gegenstückes 14 hinreichend angeschmolzen, so daß das Blech 12 auf Stoß auf das Gegenstück 14 abgesenkt wird. Dabei wird das Blech 12 auf eine Position unterhalb der oben erwähnten Null-Position abgesenkt, um eine gute Durchmischung der Schmelzen und letztlich eine gute Schweißverbindung zu erzielen. Gleichzeitig hiermit oder kurz danach, bei t₁₂, werden der Schweißstrom Is und der Spulenstrom I_{M} abgeschaltet.

Die Schmelzen kühlen ab und es entsteht eine Schweißverbindung auf Stoß zwischen dem Blech 12 und dem Gegenstück 14. Es versteht sich, daß die obige Beschreibung des Aufschweißens des Bleches 12 auf das Gegenstück 14 genauso auf die oben erwähnten Bleche 80, 90, 92 und 94 anwendbar ist.

Man erkennt in Fig. 9, daß die Periode T_{R} des Spulenstromes I_{M} während des Reinigungsvorganges größer ist als die Periode T_{S} während des Schweißvorganges. Dies liegt daran, daß der durch den Lichtbogen 24 fließende Strom während des Schweißvorganges vom Betrag her höher ist und demzufolge durch das Magnetfeld 50, 32 eine höhere Kraft erfährt und sich schneller von einem Ende der Stirnseite 22 zum anderen Ende bewegt. Alternativ hierzu könnte der Spulenstrom I_{M} auch zwischen dem Reinigungsvorgang und dem Schweißvorgang von dem Betrag her variieren.

Es versteht sich, daß der oben beschriebene Reinigungsvorgang rein optional ist. Bei einer anderen Ausführungsform wird zum Zeitpunkt t₄ unmittelbar der Schweißstrom I_{S} eingeschaltet, dann, wenn eine Vorab-Reinigung der Oberflächen nicht notwendig ist.

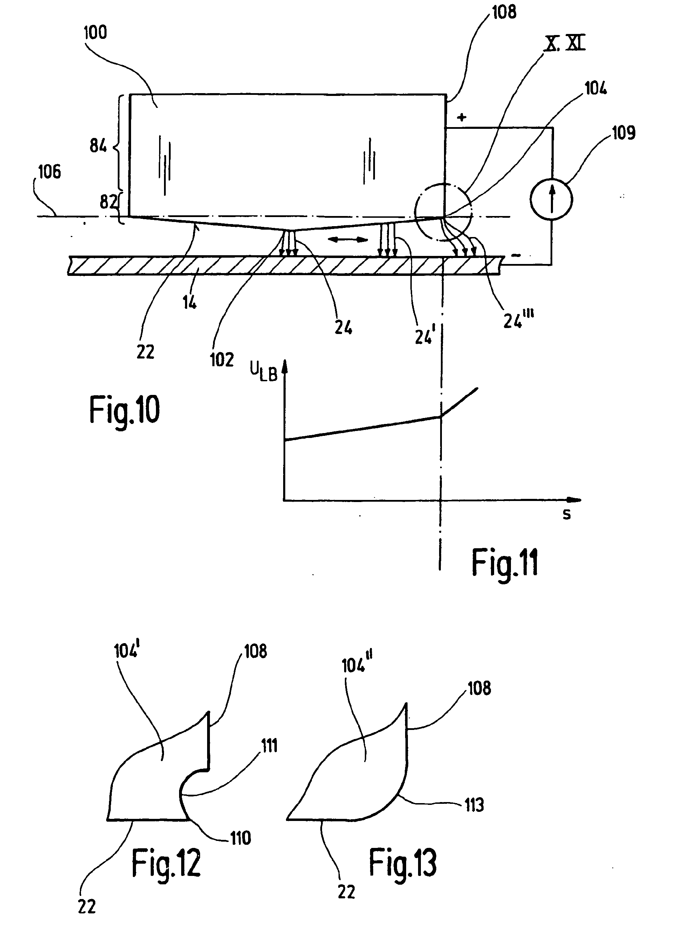

In Fig. 10 ist in einer schematischen Seitenansicht ein Schweißelement in Form eines Bleches 100 gezeigt, das auf Stoß auf ein Gegenstück 14 zu schweißen ist. Dabei ist das Blech 100 in einem leichten Abstand von dem Gegenstück 14 gezeigt.

Die Stirnseite 22 des Bleches 100 ist zur Mitte hin stumpfwinklig zulaufend ausgebildet. Die hierdurch ausgebildete stumpfwinklige Spitze 102 ist dabei dem Gegenstück 14 am nächsten angeordnet. Ausgehend von der Spitze 102 vergrößert sich der Abstand zwischen der Stirnseite 22 und dem Gegenstück 14 kontinuierlich bis hin zu den Enden der Stirnseite, von denen in Fig. 10 eines mit 104 bezeichnet ist.

Durch die Ausbildung der stumpfwinkligen Spitze 102 wird beim Aufsetzen auf das Gegenstück 14 ein definierter Kontaktpunkt eingerichtet, so daß der Lichtbogen 24 ausgehend von der stumpfwinkligen Spitze 102 beim Abheben des Bleches 100 gezogen werden kann. Der Lichtbogen 24 bewegt sich dann entlang der Stirnseite, wie es bei 24' gezeigt ist, bis hin zu dem Ende 104 der Stirnseite 22.

Als Referenz für die Kontur des Gegenstückes 104 ist in Fig. 10 eine Linie 106 eingezeichnet, die durch die beiden Enden 104 verläuft und geradlinig ausgebildet ist.

Durch die Ausgestaltung des Bleches im Bereich der Ecke 104 und getrieben durch das Magnetfeld 50, 32 bewegt sich der Lichtbogen im Bereich der Ecke 104 über die Seitenkante 108 des Bleches 100 hinaus, was in Fig. 10 schematisch bei 24"' gezeigt ist.

In Fig. 10 ist für die jeweilige Lichtbogenposition jeweils über dem Lichtbogen 24 anliegende Lichtbogenspannung U_{LB} gezeigt. Die Lichtbogenspannung U_{LB} steigt mit steigendem Abstand zwischen dem Blech 100 und dem Gegenstück 14 allmählich an. Im Bereich der Ecke 104 steigt die Lichtbogenspannung U_{LB} dann stärker an, da sich der Lichtbogen bei 24"' noch einmal schlagartig erheblich verlängert. Dieser Anstieg der Lichtbogenspannung U_{LB} läßt sich in der Steuervorrichtung 60 erkennen, was in Fig. 10 schematisch bei 109 gezeigt ist.

Durch den plötzlichen Anstieg der Lichtbogenspannung U_{LB} läßt sich erkennen, daß sich der Lichtbogen 24 im Bereich der Ecke 104 befindet. Aufgrund dieser Information läßt sich dann das Magnetfeld 50, 32 umpolen, so daß der Lichtbogen 24 anschließend in die entgegengesetzte Richtung bewegt wird. Sobald er bei der gegenüberliegenden Ecke angelangt ist, wird dies wieder über die Lichtbogenspannung U_{LB} erkannt, das Magnetfeld 50, 32 wird wieder umgepolt, usw.

Durch geeignete Ausbildung der Ecke 104 läßt sich erreichen, daß die Lichtbogenspannung U_{LB} sich im Bereich der Ecke 104 besonders leicht erkennen läßt. Beispiele für die Ausgestaltung der Ecken 104 sind in den Figuren 12 und 13 gezeigt. In Fig. 12 ist eine Ecke 104' gezeigt, die mit einer etwa viertelkreisförmigen Ausnehmung 111 versehen ist, so daß eine spitzwinklige Ecke 110 ausgebildet wird.

Eine weitere geeignete Ausgestaltung der Ecke ist in Fig. 13 bei 104" gezeigt. Bei dieser Ausgestaltung ist die Ecke 104" von der Stirnseite 22 hin zu der Seitenkante 108 abgerundet ausgebildet, was in Fig. 13 bei 113 gezeigt ist

## Patentansprüche

1. Lichtbogen-Schweißvorrichtung (10) zum Schweißen von metallischen Blechen (12; 72; 80; 90; 92; 94; 100) mit einer länglichen Stirnseite (22) auf Stoß an metallische Gegenstücke (14), mit einer Haltevorrichtung (16, 74) zum Halten eines Bleches (12; 72; 80; 90; 92; 94; 100), einer Hubvorrichtung (18) zum Vor- und Zurückbewegen der Haltevorrichtung (16; 74) auf das Gegenstück (14) zu bzw. von diesem weg, und einer Spannungsversorgungsvorrichtung (20) zum Anlegen einer Spannung zwischen Blech (12; 72; 80; 90; 92; 94; 100) und Gegenstück (14), um dazwischen einen Lichtbogen (24) zu erzeugen, einer Magnetfelderzeugungsvorrichtung (30), die dazu ausgelegt ist, ein Magnetfeld (50, 32) mit einer Komponente (32) quer zur Erstreckung der länglichen Stirnseite (22) und quer zur Erstreckung des bei dem Schweißvorgang erzeugten Lichtbogens (24) zu erzeugen, um den Lichtbogen (24) in Richtung der Erstreckung der länglichen Stirnseite (22) zu bewegen, und einer Steurvorrichtung (60), die dazu ausgelegt ist, das Magnetfeld (50, 32) umzupolen, um den Lichtbogen (24) in beide Richtungen der Erstreckung der länglichen Stirnseite (22) bewegen zu können, **dadurch gekennzeichnet, daß** die Steuervorrichtung (60) so zur Überwachung der Lichtbogenspannung ausgebildet ist, dass ein Umpolvorgang einleitbar ist, wenn sich aus einem stärkeren Anstieg der Lichtbogenspannung ergibt, daß der Lichtbogen das Ende der Stirnseite (22) erreicht hat

2. Lichtbogen-Schweißvorrichtung nach Anspruch 1, **dadurch gekennzeichnet, daß** die Magnetfelderzeugungsvorrichtung (30) dazu ausgelegt ist, das Magnetfeld (50, 32) im wesentlichen über die gesamte Länge der Stirnseite (22) zu erzeugen.

3. Lichtbogen-Schweißvorrichtung nach einem der Ansprüche 1 oder 2, **dadurch gekennzeichnet, daß** die Magnetfelderzeugungsvorrichtung (30) wenigstens eine Spule (36) aufweist, die an einen magnetischen Kreis (52) angeschlossen ist, der im Bereich der zu bildenden Schweißnaht einen Luftspalt (54) aufweist, zwischen dem das Blech (12; 72; 80; 90; 92; 94; 100) mit der Stirnseite (22) einführbar ist.

4. Lichtbogen-Schweißvorrichtung nach Anspruch 3, **dadurch gekennzeichnet, daß** der magnetische Kreis (52) zwei Joche (42, 48) aufweist, die parallel zur Erstreckung der Stirnseite (22) des Bleches (12; 72; 80; 90; 92; 94; 100) angeordnet sind und zwischen sich den Luftspalt (54) definieren.

5. Lichtbogen-Schweißvorrichtung nach Anspruch 3 oder 4, **dadurch gekennzeichnet, daß** die Spule (36) um einen Kern (38) gewickelt ist, der etwa parallel zum Blech (12; 72; 80; 90; 92; 94; 100) angeordnet ist und von dem sich zwei Jochschenkel (40, 42) in Richtung hin zu dem Blech (12, 72, 80; 90, 92; 94; 100) erstrecken, und daß der magnetische Kreis (52) ferner ein Gegenjoch (44) auf der gegenüberliegenden Seite des Bleches (12; 72; 80; 90; 92; 94; 100) aufweist, das zwei den Jochschenkeln (40, 42) entsprechende Schenkel (46, 48) und ein diese verbindendes Verbindungsstück (49) aufweist.

6. Lichtbogen-Schweißvorrichtung nach Anspruch 5, **dadurch gekennzeichnet, daß** an dem Gegenjoch (44) eine weitere Spule (62) angeordnet ist.

7. Lichtbogen-Schweißvorrichtung nach einem der Ansprüche 1-6, **dadurch gekennzeichnet, daß** das Blech (72) ein ferro-magnetisches Material aufweist und daß die Haltevorrichtung (16) ein nicht ferromagnetisches Halteelement (74) aufweist, das während des Schweißvorganges in einem Luftspalt (56) eines magnetischen Kreises (52) angeordnet ist, mittels dessen das Magnetfeld (50, 32) erzeugt wird.

8. Verfahren zum Schweißen von metallischen Blechen (12; 72; 80; 90; 92; 94; 100) mit einer länglichen Stirnseite (22) auf Stoß an metallische Gegenstücke (14), wobei zwischen dem Blech (12; 72; 80; 90; 92; 94; 100) und dem Gegenstück (14) eine Spannung angelegt wird, wobei zwischen dem Blech (12; 72; 80; 90; 92; 94; 100) und dem Gegenstück (14) ein Lichtbogen (24) gezündet wird, mittels dessen die Stirnseite (22) des Bleches (12; 72; 80; 90; 92; 94; 100) und der gegenüberliegende Teil des Gegenstückes (14) angeschmolzen werden, und wobei das Blech (12; 72; 80; 90; 92; 94; 100) schließlich zum Herstellen einer Schweißnaht auf Stoß mit dem Gegenstück (14) verbunden wird, wobei mittels einer Magnetfelderzeugungsvorrichtung (30) ein Magnetfeld (50, 32) mit einer Komponente (32) quer zur Erstreckung der länglichen Stirnseite (22) und quer zur Erstreckung des Lichtbogens (24) erzeugt wird, um den Lichtbogen (24) in Richtung der Erstreckung der länglichen Stirnseite (22) zu bewegen, so daß der Lichtbogen (24) entlang der Stirnseite wandert und das Magnetfeld (50, 32) umgepolt wird um den Lichtbogen (24) in die entgegengesetzte Richtung zu bewegen, **dadurch gekennzeichnet, daß** die Lichtbogenspannung (U_{LB}) überwacht wird und ein Umpolvorgang eingeleitet wird, wenn sich aus einem stärkeren Anstieg der Lichtbogenspannung (U_{LB}) ergibt, daß der Lichtbogen (24) das Ende der Stirnseite (22) erreicht hat.

9. Verfahren nach Anspruch 8, **dadurch gekennzeichnet, daß** die zu verschweißenden Flächen des Bleches (12; 72; 80; 90; 92; 94; 100) bzw. des Gegenstückes (14) vor dem Schweißvorgang mittels eines Lichtbogens (24) gereinigt werden, der mittels des Magnetfeldes (50) entlang jener Flächen bewegt wird und einen Strom (I_{R}) führt, dessen Betrag kleiner ist als ein Schweißstrom (I_{S}).

## Claims

1. Electric arc welding device (10) for butt welding of metallic sheets (12; 72; 80; 90; 92; 94; 100) having an elongated face (22) onto metallic counterpieces (14), having a holding device (16; 74) for holding a sheet (12; 72; 80; 90; 92; 94; 100), a reciprocating device (18) for moving the holding device (16; 74) to and fro towards the counterpiece (14) and away from it, and a voltage supply device (20) for applying a voltage between sheet (12; 72; 80; 90; 92; 94; 100) and counterpiece (14), in order to generate an electric arc (24) between them, a magnetic field generating device (30) designed to produce a magnetic field (50, 32) having a component (32) transverse to the extent of the elongated face (22) and transverse to the extent of the electric arc (24) produced in the welding operation, in order to move the electric arc (24) in the direction of the extent of the elongated face (22) and a control device (60) designed to reverse the polarity of the magnetic field (50, 32) in order to be able to move the electric arc (24) in both directions of the extent of the elongated face (22), **characterised in that** the control device (60) is designed for monitoring the voltage of the electric arc in such a way that a pole reversal operation can be initiated when it arises from a larger increase of the electric arc voltage that the electric arc has reached the end of the face (22).

2. Electric arc welding device according to claim 1, **characterised in that** the magnetic field generating device (30) is designed to produce a magnetic field (50, 32) substantially over the entire length of the face (22).

3. Electric arc welding device according to any one of claims 1 or 2, **characterised in that** the magnetic field generating device (30) comprises at least one coil (36) connected to a magnetic circuit (52) comprising an air gap (54) in the neighbourhood of the welded seam to be formed, between which the sheet (12; 72; 80; 90; 92; 94; 100) is insertable by its face (22).

4. Electric arc welding device according to claim 3, **characterised in that** the magnetic circuit (52) comprises two yokes (42, 48) arranged parallel to the extent of the face (22) of the sheet (12; 72; 80; 90; 92; 94; 100) and defining the air gap (54) between them.

5. Electric arc welding device according to claim 3 or 4, **characterised in that** the coil (36) is wound about a core (38) arranged more or less parallel to the sheet (12, 72; 80; 90; 92; 94; 100), from which two yoke legs (40, 42) extend towards the sheet (12; 72; 80; 90; 92; 94; 100), and **in that** the magnetic circuit (52) further comprises a counteryoke (44) on the opposed side of the sheet (12; 72; 80; 90; 92; 94; 100), which counteryoke comprises two legs (46, 48) corresponding to the yoke legs (40, 42) and a connection piece (49) connecting them.

6. Electric arc welding device according to claim 6, **characterised in that** an additional coil (62) is arranged on the counteryoke (44).

7. Electric arc welding device according to any of claims 1 to 7, **characterised in that** the sheet (72) comprises a ferromagnetic material and **in that** the holding device (16) comprises a non-ferromagnetic holding element (74) arranged during the welding operation in an air gap (56) of a magnetic circuit (52) by means of which the magnetic field (50, 32) is generated.

8. Method of butt welding metallic sheets (12; 72; 80; 90; 92; 94; 100) having an elongated face (22) onto metallic counterpieces (14), a voltage being applied between the sheet (12; 72; 80; 90; 92; 94; 100) and the counterpiece (14), igniting an arc (24) between the sheet (12, 72; 80; 90; 92; 94; 100) and the counterpiece (14) by means of which the face (22) of the sheet (12; 72; 80; 90; 92; 94; 100) and the facing part of the counterpiece (14) are incipiently fused, and the sheet (12; 72; 80; 90; 92; 94; 100) being finally butt-connected to the counterpiece (14) to produce a welded seam, and by means of a magnetic field generating device (30) a magnetic field (50, 32) is generated having a component (32) transverse to the extent of the elongated face (22) and transverse to the extent of the electric arc (24), in order to move the electric arc (24) in the direction of the extent of the elongated face (22) so that the electric arc (24) will travel along the face and the polarity of the magnetic field (50, 32) will be reversed, in order to move the electric arc (24) in the opposed direction, **characterised in that** the electric arc voltage (U_{LB}) is monitored, and a pole reversal operation is initiated when it arises from a larger increase of the electric arc voltage (U_{LB}) that the electric arc (24) has reached the end of the face (22).

9. Method according to claim 8, **characterised in that** the surfaces of the sheet (12; 72; 80; 90; 92; 94; 100) and counterpiece (14) to be welded are cleaned prior to the welding operation by means of an electric arc (24) moved along the said surfaces by means of the magnetic field (50) and carrying a current (I_{R}) of absolute value smaller than that of a welding current (I_{S}).

## Revendications

1. Appareil de soudage à l'arc (10) destiné à souder des tôles métalliques (12; 72; 80; 90; 92; 94; 100) ayant une face frontale allongée (22) frontalement sur des pièces conjuguées métalliques (4), comprenant un dispositif de maintien (16; 74) destiné à maintenir une tôle (12; 72; 80; 90; 92; 94; 100), un dispositif de levage (18) destiné à avancer et à reculer le dispositif de maintien (16; 74) en se rapprochant et en s'éloignant de la pièce conjuguée (14), et un dispositif d'alimentation électrique (20) destiné à appliquer une tension entre la tôle (12; 72; 80; 90; 92; 94; 100) et la pièce conjuguée (14) afin de créer un arc électrique (24) entre elles, un dispositif (30) générateur d'un champ magnétique, qui est conçu pour créer un champ magnétique (50, 32) ayant une composante transversale à l'étendue de la face frontale allongée (22) et transversale à l'orientation de l'arc électrique (24) créé pendant l'opération de soudage, de manière à déplacer l'arc électrique (24) dans les sens de l'étendue de la face frontale allongée (22), et un dispositif de commande (60), qui est conçu pour inverser la polarité du champ magnétique (50, 32) de façon à pouvoir déplacer l'arc électrique (24) dans les deux sens de l'étendue de la face frontale allongée (22),
**caractérisé en ce que**
le dispositif de commande (60) est conçu pour surveiller la tension de l'arc électrique de manière telle qu'une inversion de la polarité soit engagée, si une augmentation plus forte de la tension de l'arc électrique trahit le fait que l'arc électrique a atteint le bout de la face frontale (22).

2. Dispositif de soudage à l'arc selon la revendication 1,
**caractérisé en ce que**
le dispositif (30) de génération d'un champ magnétique est conçu pour que le champ magnétique (50, 32) soit créé, pour l'essentiel, sur toute la longueur de la face frontale (22).

3. Dispositif de soudage à l'arc selon l'une des revendications 1 ou 2,
**caractérisé en ce que**
le dispositif (30) générateur du champ magnétique comprend au moins une bobine (36) qui est reliée à un circuit magnétique (52) qui, au niveau du cordon de soudure à créer, présente un entrefer (54), dans lequel peut être introduit la tôle (12; 72; 80; 90; 92; 94; 100), par sa face frontale (22).

4. Dispositif de soudage à l'arc selon la revendication 3,
**caractérisé en ce que**
le circuit magnétique (52) comprend deux culasses (42, 48), qui sont disposées parallèlement à l'étendue de la face frontale (22) de la tôle (12; 72; 80; 90; 92; 94; 100) et définissent entre elles l'entrefer (54).

5. Dispositif de soudage à l'arc selon la revendication 3 ou 4,
**caractérisé en ce que**
la bobine (36) est enroulée autour d'un noyau (38) disposé à peu près parallèlement à la tôle (12; 72; 80; 90; 92; 94; 100), noyau depuis lequel s'étendent deux branches de culasse (40, 42) en direction de la tôle (12; 72; 80; 90; 92; 94; 100), et que le circuit magnétique (52) comprend d'autre part une culasse conjuguée (44) située du côté opposé de la tôle (12; 72; 80; 90; 92; 94; 100), comprenant deux branches de culasse (36, 48) correspondant aux branches de culasse (40, 42), et un élément de liaison (49) reliant celles-ci entre elles.

6. Dispositif de soudage à l'arc selon la revendication 5,
**caractérisé en ce que**
une bobine supplémentaire (62) est disposée sur la culasse conjuguée (44).

7. Dispositif de soudage à l'arc selon l'une des revendications 1 à 6,
**caractérisé en ce que**
la tôle (72) comporte une matière ferromagnétique, et que le dispositif de maintien (16) comporte un élément de maintien (74) non ferromagnétique, qui, pendant l'opération de soudage, est disposé dans un entrefer (56) d'un circuit magnétique (52) à l'aide duquel le champ magnétique (50, 32) est généré.

8. Procédé conçu pour souder des tôles métalliques (12; 72; 80; 90; 92; 94; 100) ayant une face frontale allongée (22) frontalement sur des pièces métalliques conjuguées (14), une tension étant appliquée entre la tôle (12; 72; 80; 90; 92; 94; 100) et la pièce conjuguée (14), un arc électrique (24) étant amorcé entre la tôle (12; 72; 80; 90; 92; 94; 100) et la pièce conjuguée (14), arc au moyen duquel la face frontale (22) de la tôle (12; 72; 80; 90; 92; 94; 100) et la partie opposée de la pièce conjuguée (14) sont portés à fusion, et pendant lequel la tôle (12; 72; 80; 90; 92; 94; 100) est enfin reliée frontalement à la pièce conjuguée (14) en formant un cordon de soudure, un dispositif (30) de génération d'un champ magnétique générant un champ magnétique (50, 32) ayant une composante (32) orientée transversalement à l'étendue de la face frontale allongée (22) et transversalement à l'orientation de l'arc électrique (24), de façon que l'arc électrique (24) évolue le long de la face frontale, et la polarité du champ magnétique (50, 32) étant inversée de manière à déplacer l'arc électrique (24) dans la direction opposée,
**caractérisé en ce que**
la tension (U_{LB}) de l'arc électrique est surveillée, et qu'une opération d'inversion de la polarité est lancée, lorsqu'une augmentation plus forte de la tension (U_{LB}) de l'arc électrique trahit le fait que l'arc électrique (24) a atteint le bout de la face frontale (22).

9. Procédé selon la revendication 8,
**caractérisé en ce que**
les surfaces à souder de la tôle (12; 72; 80; 90; 92; 94; 100) et de la pièce conjuguée (14) sont nettoyées avant l'opération de soudage, à l'aide d'un arc électrique (24), qui est déplacé le long de ces surfaces au moyen d'un champ magnétique, et qui conduit un courant (I_{R}) dont la valeur est inférieure à celle du courant de soudage (I_{S}).
